# EUROPEAN PATENT APPLICATION

(11) **EP 3 069 819 A1**
(43) Date of publication of application: **21.09.2016**
(21) Application number: 15275070.9
(22) Date of filing: 18.03.2015
(51) Int. Cl.: B23Q 3/08, B23Q 3/18, B23Q 17/22, B25B 11/00

(54) **Tool for retaining a workpiece**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

Disclosed is a tool (6) for retaining a workpiece (4) during processing of that workpiece (4). The tool (6) comprises: a surface (8); and a tooling ball (16). At least part of the tooling ball (16) is located within a cavity (18) recessed in the surface (8). Preferably, the tooling ball (16) is wholly located within the cavity (18) recessed in the surface (8). The tooling ball (16) is a precision ground reference structure that may be used to define a datum with respect to which the workpiece (4) may be located. The tooling ball (16) may be used as reference points during critical inspection, layout, and machining operations and the like performed on the workpiece (4).

## Description

### FIELD OF THE INVENTION

The present invention relates to tools for retaining workpieces during processing of those workpieces

### BACKGROUND

In the field of aircraft construction, fixed or hinged airframe panels, avionics bay doors, and the like, tend to be produced by machining a workpiece or a "blank" into a desired final shape and size by a controlled material-removal process, i.e. by a subtractive manufacturing process.

The machining of a workpiece may be performed manually by human operators, e.g. using hand tools and workbenches, or using an automated machine tool or robot controlled by a computer.

Typically, during a machining process, a secure machining tool or fixture is used to rigidly support the workpiece so as to prevent it deflecting under the machining/drilling forces.

It is known to fix a workpiece to a tool by establishing a vacuum between the tool and the workpiece using an air pump.

It is known to use tooling balls attached to the tool to define a datum with respect to which an automated machine tool may be controlled.

### SUMMARY OF THE INVENTION

In a first aspect, the present invention provides a tool for retaining a workpiece during processing of that workpiece, the tool comprising a surface, and a tooling ball. At least part of the tooling ball is located within a cavity recessed in the surface.

The tooling ball may be a precision ground reference structure that may be used to define a datum with respect to which the workpiece may be located. The tooling ball may be used as reference points during critical inspection, layout, and machining operations and the like performed on the workpiece.

The tooling ball being located within a cavity recessed within a surface of the tool tends to reduce the likelihood of the tooling ball being damaged, or moved with respect the rest of the tool, during use.

The tooling ball may be wholly located within the cavity recessed in the surface.

The surface may be configured to receive the workpiece such that, when the workpiece is retained against the surface, the tooling ball is proximate to the workpiece.

The tool may further comprise at least one further tooling ball. At least part of each further tooling ball may be located within a respective further cavity recessed in the surface.

The cavity may comprise a cavity floor, and a cavity wall separating the cavity floor from an opening of the cavity, the opening of the cavity being at the surface. The tooling ball may be attached to the cavity floor such that the tooling ball is spaced apart from the cavity wall. A distance between the tooling ball and the cavity wall may be greater than or equal to a predetermined distance so as to permit access to the tooling ball by apparatus for processing the workpiece.

The tool may further comprise: one or more channels through which a fluid may flow; a connector for attaching to a fluid pumping apparatus remote from the tool; and a non-return valve. Each of the channels may comprise a respective opening at the surface. Each of the channels may connect its opening to the connector. The non-return valve may be arranged so as to permit fluid to flow through the channels in a direction that points from the openings of the channels to the connector, and to prevent fluid to flow through the channels in a direction that points from the connector to the openings of the channels. The connector and the non-return valve may be the same device.

The tool may further comprise a further connector for attaching to a further fluid pumping apparatus remote from the tool, and a further non-return valve. Each of the channels may connect its opening to the further connector. The further non-return valve may be arranged so as to permit fluid to flow through the channels in a direction that points from the openings of the channels to the further connector, and to prevent fluid to flow through the channels in a direction that points from the further connector to the openings of the channels.

The tool may further comprise a further set of one or more channels through which a fluid may flow, a further connector for attaching to a further fluid pumping apparatus remote from the tool, and a further non-return valve. Each of the channels in the further set may comprise a respective opening at the surface. Each of the channels in the further set may connect its opening to the further connector. The further non-return valve may be arranged so as to permit fluid to flow through the channels in the further set in a direction that points from the openings of the channels in the further set to the further connector and to prevent fluid to flow through the channels in the further set in a direction that points from the further connector to the openings of the channels in the further set.

The further connector and the further non-return valve may be the same device.

The tool may further comprise a respective seal located at each channel opening. Each seal may be configured to, when the workpiece is placed onto the surface, establish an airtight seal between the workpiece and the tool.

In a further aspect, the present invention provides a method of producing a tool for retaining a workpiece during processing of that workpiece. The method comprises: providing a tool body having a surface; forming a cavity recessed in the surface; and attaching a tooling ball to the tool body such that at least part of the tooling ball is located within the cavity.

In a further aspect, the present invention provides a method of processing a workpiece. The method comprises: providing a tool, the tool comprising a surface and a plurality of tooling balls, wherein, for each tooling ball, at least part of that tooling ball is located within a respective cavity recessed in the surface; defining a datum, the datum being dependent upon the relative positions of the tooling balls; fixing the workpiece to the tool; and processing, by processing apparatus, the workpiece including locating the processing apparatus against one or more of the tooling balls and moving the processing apparatus with respect to the datum.

The step of providing the tool may comprises performing a method according to any preceding aspect.

### BRIEF DESCRIPTION OF THE DRAWINGS

Figure 1 is a schematic illustration (not to scale) of a cross-sectional side view of an assembly including a workpiece;
Figure 2 is a schematic illustration (not to scale) showing a tooling ball of the assembly;
Figure 3 is a schematic illustration (not to scale) of a network of facilities used to perform a method of processing the workpiece;
Figure 4 is a process flow chart showing certain steps of a method of processing the workpiece;
Figure 5 is a process flow chart showing certain steps of a transfer process performed during the process of Figure 4;
Figure 6 is a schematic illustration (not to scale) of the assembly during the transfer process of Figure 5; and
Figure 7 is a schematic illustration (not to scale) of a cross-sectional side view of a further assembly including the workpiece.

### DETAILED DESCRIPTION

It will be appreciated that relative terms such as top and bottom, upper and lower, and so on, are used merely for ease of reference to the Figures, and these terms are not limiting as such, and any two differing directions or positions and so on may be implemented.

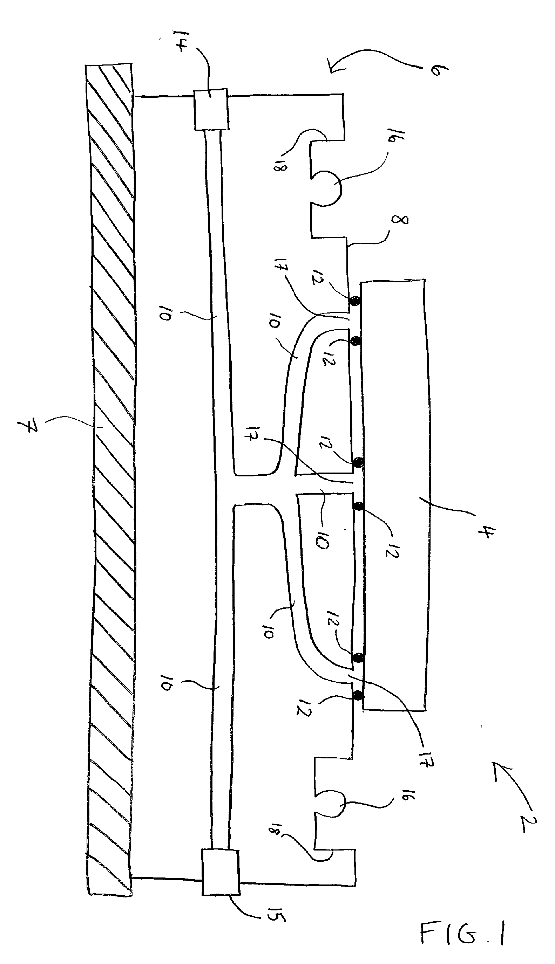

Figure 1 is a schematic illustration (not to scale) of a cross-sectional side view of an assembly 2.

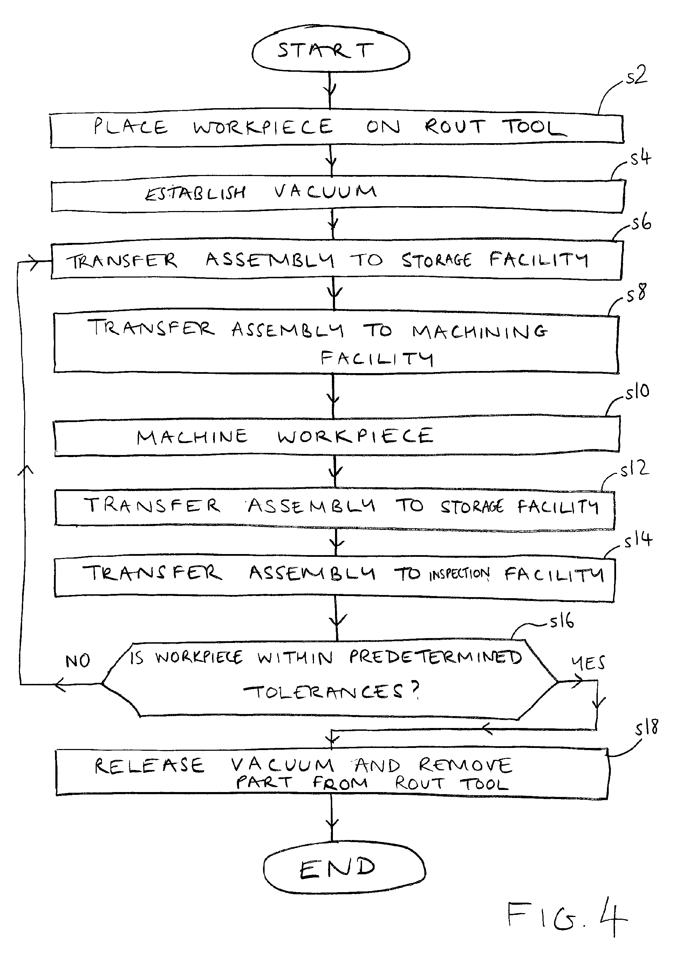

The assembly 2 comprises a workpiece 4 that is to be processed so as to form a component part of an aircraft. A method of processing the workpiece 4 so as to produce the component part of the aircraft is described in more detail later below with reference to Figure 4.

The assembly 2 further comprises a rout tool 6 and a rigid metal pallet 7 to which the rout tool 6 is fixedly attached, for example, using bolts or other fasteners. The pallet 7 facilitates the transportation and storage of the rout tool 6 (and the workpiece 4 secured thereon) as described in more detail later below with reference to Figure 4.

The rout tool 6 is a rigid machining fixture onto which the workpiece 4 is securely attached, as described in more detail later below. The rout tool 6 securely holds the workpiece 4 during a process of routing and measuring the workpiece 4. A process of routing and measuring the workpiece 4 is described in more detail later below with reference to Figure 4.

The rout tool 6 comprises an upper surface 8, a plurality of connected channels 10, a plurality of annular rubber seals 12, a first valve 14, a second valve 15, and a plurality of tooling balls 16.

In this embodiment, a plurality of channel openings 17 (i.e. openings of the channels 10) are located at the upper surface 8 of the rout tool 6. The channels 10 connect each of the channel openings 17 to both the first and second valves 14, 15. The channels 10 are tubes or passages that are arranged to allow for the flow of a fluid, for example air, between each of the channel openings 17 and both of the valves 14, 15. The channels 10 define a chamber or chambers between the workpiece 4 and the body of the rout tool 6.

In this embodiment, each channel opening 17 is surrounded by a respective annular rubber seal 12. The rubber seals 12 are fixedly attached to the upper surface 8 of the rout tool 6 in such a way that there is a respective airtight seal between each of the rubber seals 12 and the upper surface 8 of the rout tool 6.

In this embodiment, when the workpiece 4 is placed on the upper surface 8 of the rout tool 6 as shown in Figure 1, the workpiece 4 contacts with the rubber seals 12 and the rubber seals 12 are compressed by the downwards force exerted by the workpiece 4. Also, the rubber seals 12 deform against the lower surface of the workpiece 4 such that a respective airtight seal is formed between each of the rubber seals 12 and the lower surface of the workpiece 4.

In this embodiment, the first and second valves 14, 15 are non-return valves. Each valve 14, 15 is arranged to permit the flow of fluid (e.g. air) in a direction that points from the channels 10, through that valve 14, 15, to the outside of the rout tool 6. Also, each valve 14, 15 is arranged to prevent the flow of fluid (e.g. air) in a direction that points from outside of the rout tool 6, through that valve 14, 15, and into the channels 10.

In this embodiment, as described in more detail later below, each valve 14, 15 is configured to receive, i.e. be attached to, a vacuum line/pipe through which air may be pumped out of the channels 10. Thus, the valves 14, 15 are connectors or connection ports/points for vacuum lines. In this embodiment, the valves 14, 15 are self-sealing valves that, when not connected to a vacuum line, do not permit fluid to flow through them.

The tooling balls 16 are located on the upper surface 8 of the rout tool 6 proximate to the workpiece 4. Each tooling ball 16 is located within a respective open cavity 18 (or recess) recessed in the upper surface 8 of the rout tool 6.

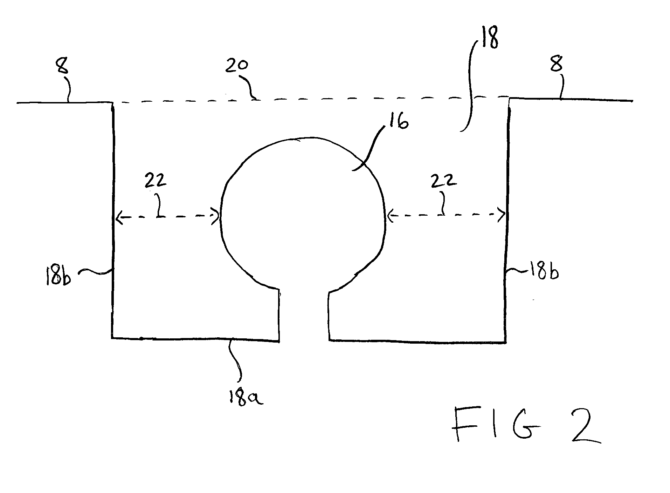

Figure 2 is a schematic illustration (not to scale) showing, in further detail, a tooling ball 16 and a portion of the rout tool 6 proximate to that tooling ball 16.

The tooling balls 16 are precision ground reference structures that, as described in more detail later below with reference to Figure 4, may be used as reference points during critical inspection, layout, and machining operations etc. The tooling balls 16 define a datum with respect to which machining and inspection processes are carried out, as defined in more detail later below with reference to Figure 4.

In this embodiment, each tooling ball 16 is located within a respective cavity 18. Each cavity 18 is recessed within the upper surface 8 of the rout tool 6.

In this embodiment, each cavity 18 comprises a cavity floor 18a and a cavity wall 18b. The cavity floor 18a of a cavity 18 is located opposite to an opening of that cavity 18, the opening being in the upper surface 8 of the rout tool 6. Also, the cavity floor 18a of a cavity 18 is substantially parallel with the upper surface 8 of the rout tool 6. The cavity floor 18a of a cavity 18 is separated from the opening of that cavity 18 by the cavity wall 18b of that cavity 18. The cavity wall 18b is substantially perpendicular to the upper surface 8 and the cavity floor 18a.

In this embodiment, each tooling ball 16 is fixedly attached (e.g. by welding) to a central portion of the cavity floor 18a of the cavity 18 in which that tooling ball 16 is located.

In this embodiment, each tooling ball 16 is wholly contained with a respective cavity 18. Thus, each tooling ball 16 does not extend from the cavity floor 18a of the cavity 18 in which it is located beyond the level of the upper surface 8. (The level of the upper surface 8 is indicated in Figure 2 by a dotted line and the reference numeral 20). In other words, when viewed from the side, as shown in Figure 2, the tooling ball 16 is wholly below the level 20 of the upper surface 8, i.e. the top of the tooling ball 16 is below the level 20 of the upper surface 8.

In this embodiment, each tooling ball 16 is spaced apart from the cavity wall 18b of the cavity 18 in which that tooling ball 16 is located. The distance between a tooling ball 16 and the cavity wall 18b of the cavity 18 in which that tooling ball 16 is located is indicated in Figure 2 by double headed arrows and the reference numerals 22. Preferably, this distance 22 is greater than or equal to a predetermined minimum distance. This predetermined minimum distance is such that, during the later described inspection and machining operations, the inspection and machining devices are able to fully access the tooling balls 16 as required. In other words, the distance 22 between each tooling ball 16 and the cavity walls 18b of the cavity 18 in which that tooling ball 16 is located is such that machining and inspection tools are able to locate themselves (i.e. contact with) that tooling ball 16 without being obstructed by the rest of the rout tool 6.

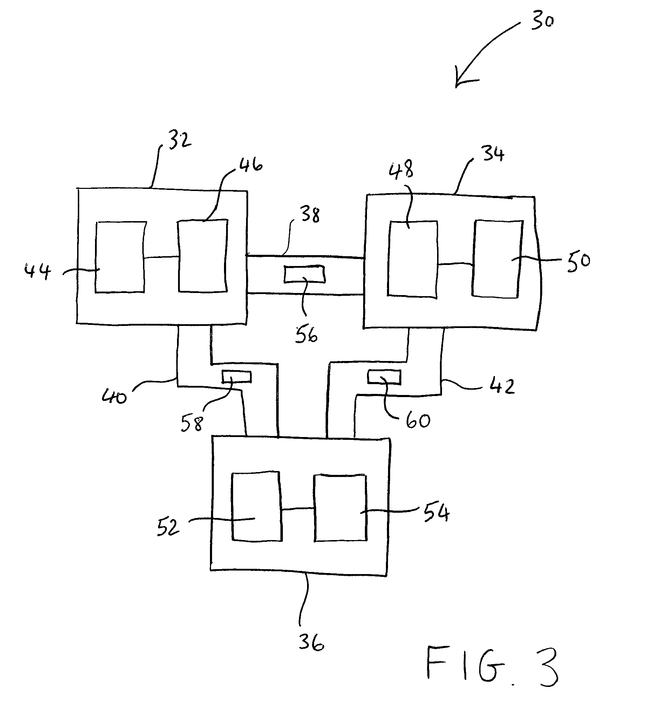

Figure 3 is a schematic illustration (not to scale) of a network of facilities (hereinafter referred to as the "network" and indicated by the reference numeral 30) used to perform a method of processing the workpiece 4 so as to produce the component part of the aircraft.

In this embodiment, the network 30 comprises a storage facility 32, a machining facility 34, an inspection facility 36, a first transport link 38, a second transport link 40, and a third transport link 42.

The storage facility 32 comprises a storage bay 44 and a first vacuum maintenance device 46.

The storage bay 44 is capable of storing the assembly 2, for example, the storage bay 44 may comprise one or more shelves, each shelf being adapted to receive one or more assemblies 2.

The first vacuum maintenance device 46 is configured to, while the assembly 2 is located at the storage facility 32 (i.e. being stored in the storage bay 44), maintain a vacuum within the channels 10 of the assembly 2, thereby securely retaining the workpiece 4 against the upper surface 8 of the rout tool 6.

In this embodiment, the first vacuum maintenance device 46 comprises a vacuum line or pipe which is connected to a vacuum pump. In use, the vacuum line of the first vacuum maintenance device 46 is attached to the first valve 14 (or alternatively the second valve 15), and the vacuum pump of the first vacuum maintenance device 46 is operated such that air is drawn out of the channels 10 of the assembly 2 via the first valve 14 (or the second valve 15) until a vacuum is formed within the channels 10. Air is substantially prevented from entering the channels by the closed second valve 15 (or, if the first vacuum maintenance device 46 is connected to the second valve 15, the closed first valve 14), and by the airtight seal between the workpiece 4 and the rout tool 6 provided by the rubber seals 12. As a result, at the storage facility 32, the workpiece 4 is securely held against the rout tool 6 by air exerting a downwards force on the workpiece 4 and forcing the workpiece 4 against the upper surface 8 of the rout tool 6.

In this embodiment, the first vacuum maintenance device 46 remains attached to the rout tool 6, and continuously pumps air out of the channels 10 of the rout tool 6, while the assembly 2 is located at the storage facility 32. Thus, even if air were to leak into the channels 10, the first vacuum maintenance device 46 maintains a sufficiently low air pressure within the channels 10 of the rout tool 6 to provide that the workpiece 4 is securely fixed to the rout tool 6 while the assembly 2 is located at the storage assembly 32.

The machining facility 34 comprises a routing (or machining) apparatus 48 and a second vacuum maintenance device 50.

The routing apparatus 48 is configured to machine the workpiece 4 of the assembly 2 according to a specified digital model of the component part that is to be produced from the workpiece 4. This machining or routing process is described in more detail later below with reference to Figure 4.

The second vacuum maintenance device 50 is configured to, while the assembly 2 is located at the machining facility 34 (i.e. during the routing process), maintain a vacuum within the channels 10 of the assembly 2, thereby securely retaining the workpiece 4 against the upper surface 8 of the rout tool 6.

In this embodiment, the second vacuum maintenance device 50 comprises a vacuum line or pipe which is connected to a vacuum pump. In use, the vacuum line of the second vacuum maintenance device 50 is attached to the first valve 14 (or alternatively the second valve 15), and the vacuum pump of the second vacuum maintenance device 50 is operated such that the vacuum within the channels 10 of the assembly is maintained. Air is prevented from entering the channels by the closed second valve 15 (or, if the second vacuum maintenance device 50 is connected to the second valve 15, the closed first valve 14), and by the airtight seal between the workpiece 4 and the rout tool 6 provided by the rubber seals 12. As a result, at the machining facility 34, the workpiece 4 is securely held against the rout tool 6 by air exerting a downwards force on the workpiece 4 and forcing the workpiece 4 against the upper surface 8 of the rout tool 6.

In this embodiment, the second vacuum maintenance device 50 remains attached to the rout tool 6, and continuously pumps air out of the channels 10 of the rout tool 6, while the assembly 2 is located at the machining facility 34. Thus, even if air were to leak into the channels 10, the second vacuum maintenance device 50 maintains a sufficiently low air pressure within the channels 10 of the rout tool 6 to provide that the workpiece 4 is securely fixed to the rout tool 6 while the assembly 2 is located at the machining facility 34.

The inspection facility 36 comprises a coordinate measuring machine (CMM) 52 and a third vacuum maintenance device 54.

The CMM 52 is configured to measure an external surface of the workpiece 4. The CMM 52, or other apparatus located at the inspection facility 36 such as one or more processors, may be configured to compare the measured workpiece 4 to the digital model of the component part that was used during the machining of the workpiece 4. This inspection process is described in more detail later below with reference to Figure 4.

The third vacuum maintenance device 54 is configured to, while the assembly 2 is located at the inspection facility 36 (i.e. during the inspection process), maintain a vacuum within the channels 10 of the assembly 2, thereby securely retaining the workpiece 4 against the upper surface 8 of the rout tool 6.

In this embodiment, the third vacuum maintenance device 54 comprises a vacuum line or pipe which is connected to a vacuum pump. In use, the vacuum line of the third vacuum maintenance device 54 is attached to the first valve 14 (or alternatively the second valve 15), and the vacuum pump of the third vacuum maintenance device 54 is operated such that the vacuum within the channels 10 of the assembly is maintained. Air is prevented from entering the channels by the closed second valve 15 (or, if third vacuum maintenance device 54 is connected to the second valve 15, the closed first valve 14), and by the airtight seal between the workpiece 4 and the rout tool 6 provided by the rubber seals 12. As a result, at the inspection facility 36, the workpiece 4 is securely held against the rout tool 6 by air exerting a downwards force on the workpiece 4 and forcing the workpiece 4 against the upper surface 8 of the rout tool 6.

In this embodiment, the third vacuum maintenance device 54 remains attached to the rout tool 6, and continuously pumps air out of the channels 10 of the rout tool 6, while the assembly 2 is located at the inspection facility 36. Thus, even if air were to leak into the channels 10, the third vacuum maintenance device 54 maintains a sufficiently low air pressure within the channels 10 of the rout tool 6 to provide that the workpiece 4 is securely fixed to the rout tool 6 while the assembly 2 is located at the inspection facility 36.

The first transport link 38 connects together the storage facility 32 and the machining facility 34 such that the assembly 2 may be transported from the storage facility 32 to the machining facility 34, and vice versa. The first transport link 38 may include any appropriate transportation means including, but not limited to, a transportation vehicle or a conveyor belt.

The first transport link 38 comprises a fourth vacuum maintenance device 56. The fourth vacuum maintenance device 56 is configured to, while the assembly 2 is being transported between the storage facility 32 and the machining facility 34, maintain a vacuum within the channels 10 of the assembly 2, thereby securely retaining the workpiece 4 against the upper surface 8 of the rout tool 6 during transportation of the assembly 2.

In this embodiment, the fourth vacuum maintenance device 56 comprises a vacuum line or pipe which is connected to a vacuum pump. In use, the vacuum line of the fourth vacuum maintenance device 56 is attached to the second valve 15 (or alternatively the first valve 14), and the vacuum pump of the fourth vacuum maintenance device 56 is operated such that the vacuum within the channels 10 of the assembly 2 is maintained. As a result, during transportation, the workpiece 4 is securely held against the rout tool 6 by air exerting a downwards force on the workpiece 4 and forcing the workpiece 4 against the upper surface 8 of the rout tool 6.

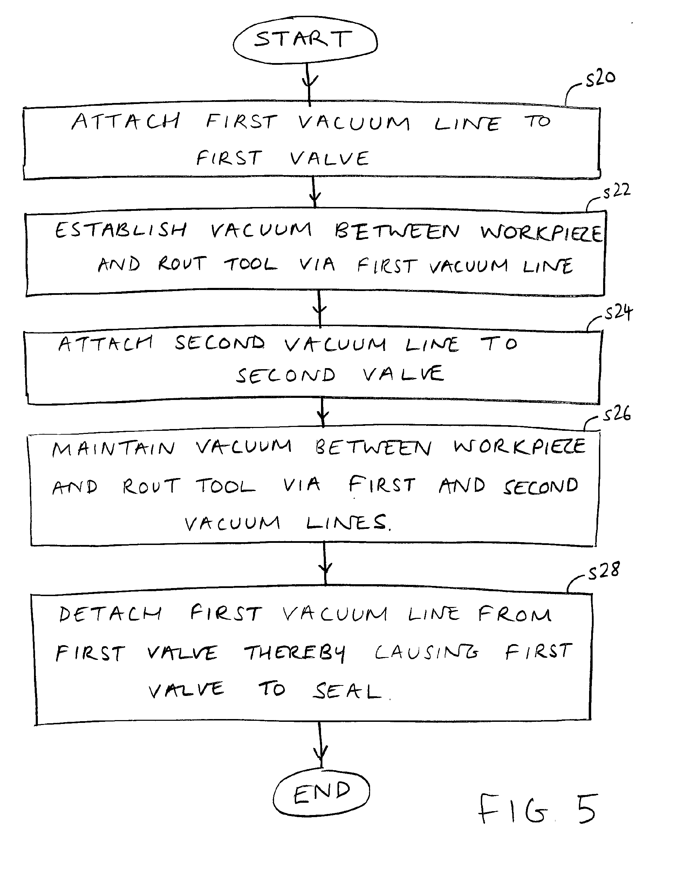

In this embodiment, the fourth vacuum maintenance device 56 and the first vacuum maintenance device 46 are configured to cooperate so as to, while the assembly 2 is moved from the storage facility 32 to the first transport link 38 or vice versa, maintain a vacuum within the channels 10 of the assembly 2. Similarly, the fourth vacuum maintenance device 56 and the second vacuum maintenance device 50 are configured to cooperate so as to, while the assembly 2 is moved from the machining facility 34 to the first transport link 38 or vice versa, maintain a vacuum within the channels 10 of the assembly 2. A handover process in which the assembly 2 is moved from one facility to another facility while maintaining a vacuum within the channels 10 of the assembly 2 is described in more detail later below with reference to Figure 5.

In this embodiment, the fourth vacuum maintenance device 56 remains attached to the rout tool 6, and continuously pumps air out of the channels 10 of the rout tool 6, while the assembly 2 is being transported by first transport link 38. Thus, even if air were to leak into the channels 10, the fourth vacuum maintenance device 56 maintains a sufficiently low air pressure within the channels 10 of the rout tool 6 to provide that the workpiece 4 is securely fixed to the rout tool 6 during transportation.

The second transport link 40 connects together the storage facility 32 and the inspection facility 36 such that the assembly 2 may be transported from the storage facility 32 to the inspection facility 36, and vice versa. The second transport link 40 may include any appropriate transportation means including, but not limited to, a transportation vehicle or a conveyor belt.

The second transport link 40 comprises a fifth vacuum maintenance device 58. The fifth vacuum maintenance device 58 is configured to, while the assembly 2 is being transported between the storage facility 32 and the inspection facility 36, maintain a vacuum within the channels 10 of the assembly 2, thereby securely retaining the workpiece 4 against the upper surface 8 of the rout tool 6 during transportation of the assembly 2.

In this embodiment, the fifth vacuum maintenance device 58 comprises a vacuum line or pipe which is connected to a vacuum pump. In use, the vacuum line of the fifth vacuum maintenance device 58 is attached to the first valve 14 (or alternatively the second valve 15), and the vacuum pump of the fifth vacuum maintenance device 58 is operated such that the vacuum within the channels 10 of the assembly 2 is maintained. As a result, during transportation, the workpiece 4 is securely held against the rout tool 6 by air exerting a downwards force on the workpiece 4 and forcing the workpiece 4 against the upper surface 8 of the rout tool 6.

In this embodiment, the fifth vacuum maintenance device 58 and the first vacuum maintenance device 46 are configured to cooperate so as to, while the assembly 2 is moved from the storage facility 32 to the second transport link 40 or vice versa, maintain a vacuum within the channels 10 of the assembly 2. Similarly, the fifth vacuum maintenance device 58 and the third vacuum maintenance device 54 are configured to cooperate so as to, while the assembly 2 is moved from the inspection facility 36 to the second transport link 40 or vice versa, maintain a vacuum within the channels 10 of the assembly 2.

In this embodiment, the fifth vacuum maintenance device 58 remains attached to the rout tool 6, and continuously pumps air out of the channels 10 of the rout tool 6, while the assembly 2 is being transported by second transport link 40. Thus, even if air were to leak into the channels 10, the fifth vacuum maintenance device 58 maintains a sufficiently low air pressure within the channels 10 of the rout tool 6 to provide that the workpiece 4 is securely fixed to the rout tool 6 during transportation.

The third transport link 42 connects together the machining facility 34 and the inspection facility 36 such that the assembly 2 may be transported from the machining facility 34 to the inspection facility 36, and vice versa. The third transport link 42 may include any appropriate transportation means including, but not limited to, a transportation vehicle or a conveyor belt.

The third transport link 42 comprises a sixth vacuum maintenance device 60. The sixth vacuum maintenance device 60 is configured to, while the assembly 2 is being transported between the machining facility 34 and the inspection facility 36, maintain a vacuum within the channels 10 of the assembly 2, thereby securely retaining the workpiece 4 against the upper surface 8 of the rout tool 6 during transportation of the assembly 2.

In this embodiment, the sixth vacuum maintenance device 60 comprises a vacuum line or pipe which is connected to a vacuum pump. In use, the vacuum line of the sixth vacuum maintenance device 60 is attached to the first valve 14 (or alternatively the second valve 15), and the vacuum pump of the sixth vacuum maintenance device 60 is operated such that the vacuum within the channels 10 of the assembly 2 is maintained. As a result, during transportation, the workpiece 4 is securely held against the rout tool 6 by air exerting a downwards force on the workpiece 4 and forcing the workpiece 4 against the upper surface 8 of the rout tool 6.

In this embodiment, the sixth vacuum maintenance device 60 and the second vacuum maintenance device 50 are configured to cooperate so as to, while the assembly 2 is moved from the machining facility 34 to the third transport link 42 or vice versa, maintain a vacuum within the channels 10 of the assembly 2. Similarly, the sixth vacuum maintenance device 60 and the third vacuum maintenance device 54 are configured to cooperate so as to, while the assembly 2 is moved from the inspection facility 36 to the third transport link 42 or vice versa, maintain a vacuum within the channels 10 of the assembly 2.

In this embodiment, the sixth vacuum maintenance device 60 remains attached to the rout tool 6, and continuously pumps air out of the channels 10 of the rout tool 6, while the assembly 2 is being transported by third transport link 42. Thus, even if air were to leak into the channels 10, the sixth vacuum maintenance device 60 maintains a sufficiently low air pressure within the channels 10 of the rout tool 6 to provide that the workpiece 4 is securely fixed to the rout tool 4 during transportation.

Figure 4 is a process flow chart showing certain steps of a method of processing the workpiece 4 so as to produce the component part of the aircraft.

At step s2, the workpiece 4 is placed onto the upper surface 8 of the rout tool 6 such that the lower surface of the workpiece 4 is in contact with the rubber seals 12 and an airtight seal is formed between the rout tool 6 and the workpiece 4.

At step s4, a vacuum is formed in the channels 10 of the rout tool 6, thereby securely fixing the workpiece 4 to the rout tool 6 and forming the assembly 2.

In some embodiments, at step s4, the vacuum within the channels 10 of the rout tool 6 is formed by the first vacuum maintenance device 46 at the storage facility 32. In particular, the vacuum line of the first vacuum maintenance device 46 is attached to the first valve 14, and the vacuum pump of the first vacuum maintenance device 46 is operated such that air is drawn out of the channels 10 of the assembly 2 via the first valve 14 until a vacuum is formed within the channels 10. However, in other embodiments, at step s4, the vacuum within the channels 10 may be formed by a different vacuum maintenance device.

At step s6, the assembly is transferred to, and stored at, the storage facility 32.

In some embodiments, the assembly 2 is assembled at the storage facility 32. However in other embodiments the assembly 2 is assembled elsewhere and subsequently moved to the storage facility 32.

The assembly 2 is stored at the storage bay 44 and, while the assembly 2 is located in the storage bay 44, the first vacuum maintenance device 46 maintains a vacuum within the channels 10 of the assembly 2, thereby securely retaining the workpiece 4 against the upper surface 8 of the rout tool 6. Also, while the assembly 2 is located at the storage facility 32, the first vacuum maintenance device 46 remains attached to the rout tool 6, and continuously pumps air out of the channels 10 of the rout tool 6.

At step s8, the assembly 2 is transferred from the storage facility 32 to the machining facility 34 via the first transport link 38. This may be performed as follows.

Firstly, the assembly 2 is transferred from the storage facility 32 to the first transport link 38, during which transfer the fourth vacuum maintenance device 56 and the first vacuum maintenance device 46 cooperate so as to continuously maintain a vacuum within the channels 10 of the assembly 2. A process of "handing over" the assembly 2 from one vacuum maintenance device to a different vacuum maintenance device is described in more detail later below with reference to Figure 5.

Secondly, the first transport link 38 transports the assembly 2 to the machining facility 34. While the assembly 2 is being transported, the fourth vacuum maintenance device 56 maintains a vacuum within the channels 10 of the assembly 2, thereby securely retaining the workpiece 4 against the upper surface 8 of the rout tool 6. Also, while the assembly 2 being transported, the fourth vacuum maintenance device 56 remains attached to the rout tool 6, and continuously pumps air out of the channels 10 of the rout tool 6.

Thirdly, the assembly 2 is transferred from the first transport link 38 to the machining facility 34, during which transfer the fourth vacuum maintenance device 56 and the second vacuum maintenance device 50 cooperate so as to continuously maintain a vacuum within the channels 10 of the assembly 2.

At step s10, the routing apparatus 48 is controlled to machine the workpiece 4 of the assembly 2. This routing process is performed in accordance with a pre-specified digital model of the component part that is to be produced.

In this embodiment, the routing process is a subtractive manufacturing process during which parts of the workpiece 4 are removed by the routing apparatus 48. However, in other embodiments, one or more different processes may be performed instead of or in addition to the subtractive routing process. Such processes include, but are not limited to, a polishing process and/or an additive manufacturing process.

In this embodiment, the tooling balls 16 on the rout tool 6 define a datum with respect to which the routing process is performed. The routing process comprises the routing apparatus 48 locating against (i.e. contacting with) a tooling ball 16, and from this "zero position", moving to and machining the workpiece 4. The digital model for the aircraft component that is to be produced is defined with respect to the datum defined by the tooling balls 16. During the machining process, the routing apparatus 48 may periodically locate itself against the tooling balls 16 to ensure that the workpiece 4 is accurately machined with respect to the digital model and the datum.

While the assembly 2 is located at the machining facility 34 (i.e. during the routing process), the second vacuum maintenance device 50 maintains a vacuum within the channels 10 of the assembly 2, thereby securely retaining the workpiece 4 against the upper surface 8 of the rout tool 6. Thus, movement of the workpiece 4 with respect to the rout tool 6 caused by the application of machining forces to the workpiece 4 during the routing process tends to be substantially prevented. Also, while the assembly 2 is located at the machining facility 34, the second vacuum maintenance device 50 remains attached to the rout tool 6, and continuously pumps air out of the channels 10 of the rout tool 6.

At step s12, after the workpiece has been machined, the assembly 2 is transferred from the machining facility 34 to the storage facility 32 via the first transport link 38. This transfer may be performed by reversing the process performed at step s8.

The assembly 2 may then be stored at the storage facility 32, for example, until the inspection facility 36 is capable of receiving and processing the assembly 2. The assembly 2 is stored at the storage bay 44 and, while the assembly 2 is located in the storage bay 44, the first vacuum maintenance device 46 maintains a vacuum within the channels 10 of the assembly 2, thereby securely retaining the workpiece 4 against the upper surface 8 of the rout tool 6. Also, while the assembly 2 is located at the storage facility 32, the first vacuum maintenance device 46 remains attached to the rout tool 6, and continuously pumps air out of the channels 10 of the rout tool 6.

In other embodiments, at step s8, instead of being transferred from the machining facility 34 to the storage facility 32, the assembly 2 is instead transferred from the machining facility 34 to the inspection facility 36 via the third transport link 42. Such a transfer of the apparatus 2 from the machining facility 34 to the inspection facility 36 may be performed by transferring the assembly from the machining facility 34 to the third transport link 42, and then from the third transport link 42 to the inspection facility 36. This may be performed using the process described at step s8 *mutatis mutandis.*

At step s14, the assembly 2 is transferred from the storage facility 32 to the inspection facility 36 via the second transport link 40. This transfer of the apparatus 2 from the storage facility 32 to the inspection facility 36 may be performed by transferring the assembly 2 from the storage facility 32 to second transport link 40, and then from the second transport link 40 to the inspection facility 36. This may be performed using the process described at step s8 *mutatis mutandis.*

At step s16, the CMM 52 performs an inspection process on the workpiece 4 including measuring an external surface of the workpiece 4 and determining whether or not the machined workpiece 4 is within certain pre-specified tolerance limits. For example, the CMM 52 may compare the measured surface of the workpiece 4 to the digital model of the component being produced.

In this embodiment, the inspection process is performed relative to the datum defined by the tooling balls 16. The inspection process comprises the CMM 52 locating against (i.e. contacting with) a tooling ball 16, and from this "zero position", moving to and measuring the external surface of the workpiece 4. During the inspection process, the CMM 52 may periodically locate itself against the tooling balls 16 to ensure that the workpiece 4 is measured with respect to the digital model and the datum.

While the assembly 2 is located at the inspection facility 36 (i.e. during the inspection process), the third vacuum maintenance device 54 maintains a vacuum within the channels 10 of the assembly 2, thereby securely retaining the workpiece 4 against the upper surface 8 of the rout tool 6. Thus, movement of the workpiece 4 with respect to the rout tool 6 caused by the application of forces to the workpiece 4 during the inspection process tends to be substantially prevented. Also, while the assembly 2 is located at the inspection facility 36, the third vacuum maintenance device 54 remains attached to the rout tool 6, and continuously pumps air out of the channels 10 of the rout tool 6.

If, at step s16, it is determined that the workpiece 4 is not within the pre-defined tolerance range, in this embodiment, the method proceeds back to step s4 and the assembly is transferred from the inspection facility 36 to the storage facility 32. This transfer may be performed by reversing the process performed at step s14. In other embodiments, if it is determined that the workpiece 4 is not within the pre-defined tolerance range, instead of being transferred from the inspection facility 36 to the storage facility 32, the assembly 2 is instead transferred from the inspection facility 36 to the machining facility 34 via the third transport link 42, where the workpiece may be re-machined.

However, if at step s16 it is determined that the workpiece 4 is within the pre-defined tolerance range, the method proceeds to step s18.

At step s18, the vacuum within the channels 10 of the rout tool 6 is released (i.e. air is allowed to enter the channels 10), and the machined workpiece (i.e. the produced component part) is removed from the rout tool 6.

The release of the vacuum may be performed in any appropriate way, for example, by opening one or both of the valves 14, 15.

Thus, a method of processing the workpiece 4 so as to produce the component part of the aircraft is provided.

What will now be described is a method of "continuous vacuum handover" in which the assembly 2 is transferred from one entity to another entity while maintaining a vacuum within the channels 10 of the rout tool 6, and thereby securely retaining the workpiece against the rout tool 6.

Figure 5 is a process flow chart showing certain steps of a handover or transfer process in which a vacuum within the channels 10 of the rout tool 6 is maintained.

The process of Figure 5 describes the handover of the assembly 2 from the storage facility 32 to the first transport link 38. However, it will be appreciated by those skilled in the art that the described process is equally applicable, *mutatis mutandis,* to the handover of the assembly 2 between any two entities of the network 30 including, but not limited to, handover from the first transport link 38 to the storage facility 32, handover between the storage facility 32 and the second transport link 40, handover between the inspection facility 36 and the second transport link 40, handover between the first transport link 38 and the machining facility 34, handover between the third transport link 42 and the machining facility 34, and handover between the third transport link 42 and the inspection facility 36.

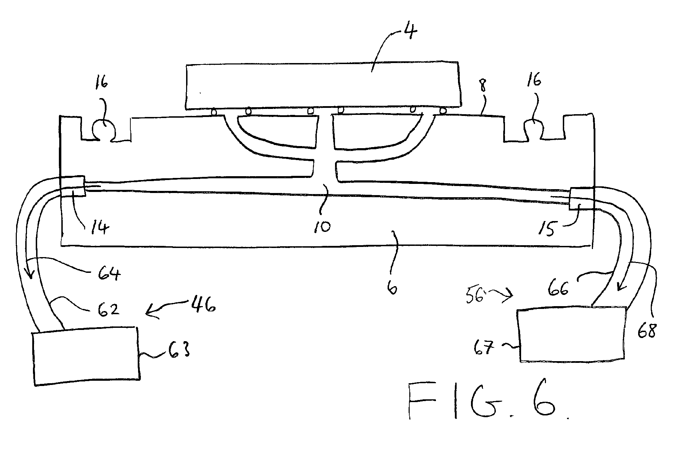

In the description of Figure 5, reference will be made to Figure 6 which is a schematic illustration (not to scale) of the assembly 2 at a certain stage of the handover process.

At step s20, with the workpiece 4 placed onto the upper surface 8 of the rout tool 6 such that an airtight seal is formed between the rout tool 6 and the workpiece 4, the vacuum line of the first vacuum maintenance device 46 (hereinafter referred to as the "first vacuum line" and indicated in Figure 6 by the reference numeral 62) is attached to the first valve 14. At step s20, the assembly 2 is located at the storage facility 32.

At step s22, the vacuum pump of the first vacuum maintenance device 46 (hereinafter referred to as the "first vacuum pump" and indicated in Figure 6 by the reference numeral 63) is operated so that air is drawn out of the channels 10 of the rout tool 6 via the first valve 14 in the direction indicated in Figure 6 by a solid arrow and the reference numeral 64. In this way, a vacuum is formed within the channels 10 and the workpiece 4 is securely held against the upper surface 8 of the rout tool 6.

At step s24, while the first vacuum maintenance device 46 maintains a vacuum within the chambers 10, the vacuum line of the fourth vacuum maintenance device 56 (hereinafter referred to as the "second vacuum line" and indicated in Figure 6 by the reference numeral 66) is attached to the second valve 15.

At step s26, the vacuum pump of the fourth vacuum maintenance device 56 (hereinafter referred to as the "second vacuum pump" and indicated in Figure 6 by the reference numeral 67) is operated so that air is drawn out of the channels 10 of the rout tool 6 via the second valve 15 in the direction indicated in Figure 6 by a solid arrow and the reference numeral 68. Thus, at steps s26, the vacuum within the channels 10 is maintained by both the first vacuum maintenance device 46 and the fourth vacuum maintenance device 56 (via the first and second valves 14, 15 respectively).

At step s28, the first vacuum line 62 is detached from the first valve 14. As the first valve 14 is a self-sealing non-return valve, air is not permitted to flow through the first valve 14 and into the channels 10. Thus, the vacuum within the channels 10 is maintained by only the fourth vacuum maintenance device 56 (i.e. by the second vacuum line 66 and the second vacuum pump 67) via the second valve 15.

In this embodiment, detachment of the first vacuum line 62 may be performed such that the pumping force applied to the rout tool 6 by the first vacuum maintenance device 46 is gradually reduced. For example, the pumping force applied to the rout tool 6 by the first vacuum maintenance device 46 may be gradually reduced until no pumping force is applied by the first vacuum maintenance device, and then the first vacuum line 62 may be subsequently detached from the first valve 14. Nevertheless, in some embodiments, there is no gradual reduction in pumping force.

Once first vacuum maintenance device 46 has been disconnected from the assembly and the vacuum within the channels 10 is maintained by the fourth vacuum maintenance device 56 only, the assembly may be moved, by the first transport link 38, away from the storage facility 32.

Thus a transfer process is provided in which the vacuum within the channels 10 is changed from being maintained by one vacuum maintenance device to being maintained by a different vacuum maintenance device.

An advantage provided by the above described method and apparatus is that, throughout the production process (i.e. throughout the storage, machining inspection, and transportation processes), the workpiece tends to be maintained at a constant position and orientation on the rout tool. This is provided by maintaining a constant vacuum between the workpiece and the rout tool throughout the production process. Thus, the workpiece tends to remain at substantially the same position and orientation relative to the datum provided by the tooling balls, with respect to which the workpiece is machined and inspected. Movement (e.g. translation, deflection etc.) of the workpiece with respect to the rout tool, and hence with respect to the datum, tends to be substantially prevented by the secure attachment of the workpiece to the rout tool. This advantageously tends to increase the accuracy with which the aircraft component is produced. Furthermore, this advantageously tends to reduce or substantially minimise the number of iterations of the machining and inspection processes performed to produce the aircraft component.

The tooling balls being located within cavities recessed within a surface of the rout tool advantageously tends to reduce the likelihood of the tooling balls being damaged during the production processes. For example, if the tooling balls of a rout tool were not located in recessed cavities, and instead protruded from that rout tool, during transportation of that rout tool, the tooling balls may be knocked against, or impacted by, other entities. This may cause the the tooling balls to be moved with respect to one another and/or with respect to the workpiece attached to that rout tool. This problem tends to be reduced or eliminated by locating the tooling balls in recessed cavities in a surface of the rout tool. Thus, the datum with respect to which the workpiece s machined and inspected advantageously tends to be preserved throughout the entire production process. Furthermore, having the tooling balls located at the upper surface of the rout tool, proximate to the workpiece, advantageously means that, during machining and inspections processes, the routing apparatus and CMM only have to move a relative small distance from the datum's "zero position" (i.e. from a tooling ball) to the workpiece. Thus, errors tends to be reduced.

The storage, machining, and inspection processes being performed at different remote facilities advantageously tends to facilitate scheduling of the production processes. The machining and inspection processes may be performed independently from one another, with any assemblies awaiting machining or inspection processes being stored at the storage facility. Furthermore, assemblies may be stored at the storage facility until any backlogs at the machining and/or inspections facilities have been cleared, or any repairs or maintenance to the routing apparatus and/or CMM have been performed.

Advantageously, the rout tool is mounted to a rigid pallet. This rigid pallet is of a standard size. The pallet is configured to receive tools (e.g. different shaped rout tools or different types of tool, such as mould tools). The storage, machining, and inspection facilities are configured to process the standard pallet. Also, the transport link are configured to transport the standardised pallet. Thus, different assemblies having different tools may be transferred through the network, and processed by the facilities within the network, without having to reconfigured or adapted any of the facilities of transport links.

It should be noted that certain of the process steps depicted in the flowchart of Figures 4 and 5 and described above may be omitted or such process steps may be performed in differing order to that presented above and shown in Figures 4 and 5. Furthermore, although all the process steps have, for convenience and ease of understanding, been depicted as discrete temporally-sequential steps, nevertheless some of the process steps may in fact be performed simultaneously or at least overlapping to some extent temporally.

Apparatus, including one or more processors for controlling one or more of the vacuum maintenance devices, the routing apparatus, and/or the CMM apparatus to perform the method steps described earlier above, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

In the above embodiments, the tool of the assembly is a rout tool that is used during routing and inspection processes. However, in other embodiments a different type of tool is used. For example, in some embodiments, a mould tool that defines a mould surface against which the workpiece is to be moulded may be performed.

In the above embodiments, the assembly comprises a plurality of annular rubber seals. However, in other embodiments one or more different types of seal are used instead of or in addition to one or more of the rubber seals. In some embodiments, no seals are used between the workpiece and the upper surface of the rout tool.

In the above embodiments, the valves are connectors to which vacuum lines of the vacuum maintenance devices may be attached. However, in other embodiments the rout tool may comprise separate connectors and valves. In other words, in some embodiments, the connectors and the valves are different, separate devices.

In the above embodiments, the rout tool comprises two valves (and hence two vacuum line connectors). However, in other embodiments the rout tool comprises a different number of valves, for example more than two valves. Also, in other embodiments, the rout tool comprises a different number of vacuum line connectors, for example, more than two connectors.

In the above embodiments, the tooling balls are located on the upper surface of the rout tool. However, in other embodiments the tooling balls are located on a different surface of the rout tool. Preferably, there are at least three tooling balls.

In the above embodiments, the network comprises a storage facility, a machining facility, an inspection facility, and transport links between those facilities. However, in other embodiments the network comprises one or more different facilities instead of or in addition to one or more of the above mentioned facilities. A different facility may be configured to process the workpiece differently to the storage facility, a machining facility, and/or inspection facility. In some embodiments, there is a different number of transport links between the facilities and/or the facilities of the network are connected together by the transport links in a different way to that shown in Figure 3 and described above.

In the above embodiments, the channels connect the channels openings to both of the valves/connectors. However, in other embodiments, the channels do not connect the channels openings to both of the valves/connectors.

For example, in some embodiments, each channel may connect its opening to only a single valve/connector.

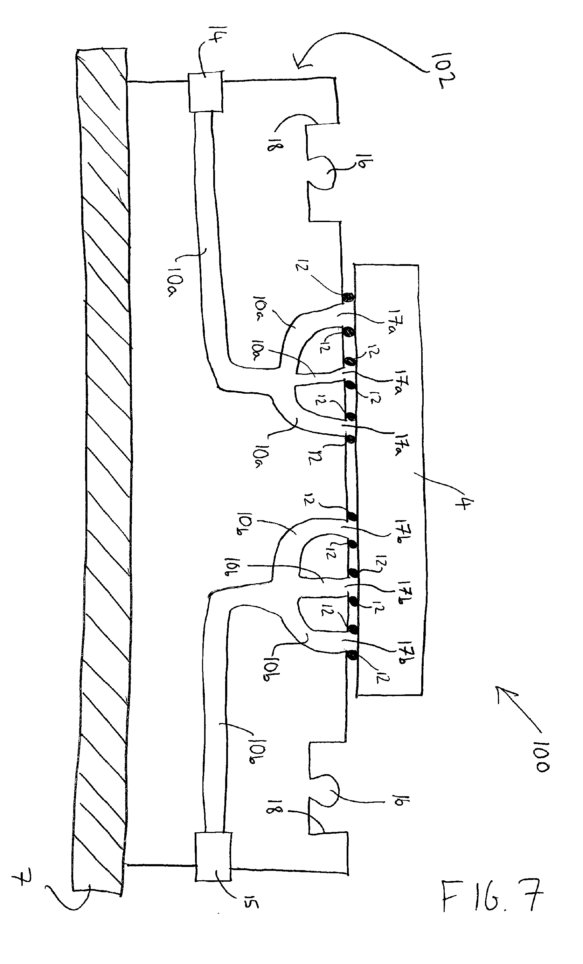

Figure 7 is a schematic illustration (not to scale) showing a further assembly 100 comprising a further rout tool 102, the further rout tool 102 being in accordance with a further embodiment. Elements common to the further assembly 100 and the assembly 2 shown in Figure 1 are indicated in Figure 7 by the same reference numerals. In this further embodiment, the further rout tool 100 comprises two separate sets of connected channels 10a, 10b. Each set of channels 10a, 10b connects its respective set of openings 17a, 17b to a respective valve 14, 15. In this further embodiment, the handover process may be performed in the same way as that described in more detail earlier above with respect to Figure 5.

In the above embodiments, when moving between facilities, the task of maintaining the vacuum within the channels is handed over from one vacuum maintenance device to a different vacuum maintenance device, as described in more detail earlier above with reference to Figure 5. However, in other embodiments, handover may be performed in a different way. Also, in other embodiments, handover is not performed and, instead, the vacuum within the channels is maintained throughout the entire production process by a single vacuum maintenance device. Such a vacuum maintenance device may, for example, be common to all facilities, or be moved from facility to facility with the assembly. For example, in some embodiments, the assembly comprises a vacuum maintenance device which is configured to maintain a vacuum within the channels and be transported with the rest of the assembly. In such embodiments, the vacuum maintenance device may be integral to the rout tool.

In the above embodiments, the assembly is transferred between remote processing facilities, each of which performs a different operation on the workpiece. However, in other embodiments the assembly is not transferred between different facilities and instead remains located at the same facility.

## Claims

1. A tool (6) for retaining a workpiece (4) during processing of that workpiece (4), the tool (6) comprising:
a surface (8); and
a tooling ball (16); wherein
at least part of the tooling ball (16) is located within a cavity (18) recessed in the surface (8).

2. A tool (6) according to claim 1, wherein the tooling ball (16) is wholly located within the cavity (18) recessed in the surface (8).

3. A tool (6) according to claim 1 or 2, wherein the surface (8) is configured to receive the workpiece (4) such that, when the workpiece (4) is retained against the surface (8), the tooling ball (16) is proximate to the workpiece (4).

4. A tool (6) according to any of claims 1 to 3, wherein:
the tool (6) further comprises at least one further tooling ball (16); and
at least part of each further tooling ball (16) is located within a respective further cavity (18) recessed in the surface (8).

5. A tool (6) according to any of claims 1 to 4, wherein:
the cavity (18) comprises:
a cavity floor (18a); and
a cavity wall (18b) separating the cavity floor (18a) from an opening of the cavity (18), the opening of the cavity (18) being at the surface (8); and
the tooling ball (16) is attached to the cavity floor (18a) such that the tooling ball (16) is spaced apart from the cavity wall (18b).

6. A tool (6) according to claim 5, wherein a distance between the tooling ball (16) and the cavity wall (18b) is greater than or equal to a predetermined distance so as to permit access to the tooling ball (16) by apparatus for processing the workpiece (4).

7. A tool (6) according to any of claims 1 to 6, the tool (6) further comprising:
one or more channels (10) through which a fluid may flow;
a connector (14, 15) for attaching to a fluid pumping apparatus remote from the tool (6); and
a non-return valve (14); wherein
each of the channels (10) comprises a respective opening (17) at the surface (8);
each of the channels (10) connects its opening (17) to the connector (14, 15);
the non-return valve (14) is arranged so as to permit fluid to flow through the channels (10) in a direction that points from the openings (17) of the channels (10) to the connector (14), and to prevent fluid to flow through the channels (10) in a direction that points from the connector (14) to the openings (17) of the channels (10).

8. A tool (6) according to claim 7, wherein the connector (14) and the non-return valve (14) are the same device.

9. A tool (6) according to claim 7 or 8, the tool (6) further comprising:
a further connector (15) for attaching to a further fluid pumping apparatus remote from the tool (6); and
a further non-return valve (15); wherein
each of the channels (10) connects its opening to the further connector (15); and
the further non-return valve (15) is arranged so as to permit fluid to flow through the channels (10) in a direction that points from the openings (17) of the channels (10) to the further connector (15), and to prevent fluid to flow through the channels (10) in a direction that points from the further connector (15) to the openings (17) of the channels (10).

10. A tool (6) according to claim 7 or 8, the tool (6) further comprising:
a further set of one or more channels through which a fluid may flow;
a further connector for attaching to a further fluid pumping apparatus remote from the tool; and
a further non-return valve; wherein
each of the channels in the further set comprises a respective opening at the surface (8);
each of the channels in the further set connects its opening to the further connector; and
the further non-return valve is arranged so as to permit fluid to flow through the channels in the further set in a direction that points from the openings of the channels in the further set to the further connector and to prevent fluid to flow through the channels in the further set in a direction that points from the further connector to the openings of the channels in the further set.

11. A tool (6) according to claim 9 or 10, wherein the further connector and the further non-return valve are the same device.

12. A tool (6) according to any of claims 7 to 11, the tool (6) further comprising a respective seal (12) located at each channel opening (17), each seal (12) being configured to, when the workpiece (4) is placed onto the surface (8), establish an airtight seal between the workpiece (4) and the tool (6).

13. A method of producing a tool (6) for retaining a workpiece (4) during processing of that workpiece (4), the method comprising:
providing a tool (6) body having a surface (8);
forming a cavity (18) recessed in the surface (8); and
attaching a tooling ball (16) to the tool (6) body such that at least part of the tooling ball (16) is located within the cavity (18).

14. A method of processing a workpiece (4), the method comprising:
providing a tool, the tool (6) comprising a surface (8) and a plurality of tooling balls (16), wherein, for each tooling ball (16), at least part of that tooling ball (16) is located within a respective cavity (18) recessed in the surface (8);
defining a datum, the datum being dependent upon the relative positions of the tooling balls (16);
fixing the workpiece (4) to the tool (6); and
processing, by processing apparatus, the workpiece (4) including locating the processing apparatus against one or more of the tooling balls (16) and moving the processing apparatus with respect to the datum.

15. A method according to claim 14, wherein the step of providing the tool (6) comprises performing a method according to claim 13.
